# EUROPEAN PATENT APPLICATION

(11) **EP 2 163 156 A1**
(43) Date of publication of application: **17.03.2010**
(21) Application number: 08164369.4
(22) Date of filing: 15.09.2008
(51) Int. Cl.: A01M 9/00

(54) **Device and method for dispensing beneficial arthropods**

(71) Applicant: Biobest NV, 2260 Westerlo (BE); NIC Sosef B.V., 2675 AM Honselerdijk (NL)
(72) Inventor: Vanderbruggen, David, B-2260, WESTERLO (BE); Munneke, Harrold, NL-2675 AM, HONSELERSDIJK (NL)
(74) Representative: pronovem

(57) **Abstract**

A device (20) for dispensing beneficial arthropods comprises a housing (21) for containing said beneficial arthropods, the housing being configured for rotating on an axis (24) in both senses (241, 242), a paddle (25) for agitating said arthropods in the housing and an outlet (23) for the beneficial arthropods. Considering a tangential viewpoint about the axis, the outlet is provided juxtaposed to the paddle and at one side thereof. With such a configuration it is achieved that the paddle shields the outlet when the housing is rotated on the axis in the sense (242) wherein the paddle precedes the outlet. A method for dispensing beneficial arthropods by the provision of devices of the invention is also disclosed.

## Description

### Field of the invention

The present invention is related to devices and to methods for dispensing beneficial arthropods. Particularly, the invention is related to such devices and to such methods, wherein the beneficial arthropods are transported from the device to the crop solely by gravity. Such beneficial arthropods can be used for combating pests (e.g. insects or mites) and/or diseases in crops.

### State of the art

Biological pest control is increasingly used in agriculture because of its effectiveness, for environmental reasons and for biological agriculture. In biological pest control, beneficial arthropods, such as predatory mites, parasite wasps, assassin bugs, etc. are applied to crops. Such beneficial arthropods can combat crop pests such as spider mite, white fly and thrips.

These beneficial arthropods are typically provided in a mixture with a carrier, such as bran or vermiculite. The carrier is typically a substance wherein the arthropods can deposit their eggs, and which can provide "shelter" for the arthropods and hence allows the arthropods to be manipulated easily without the risk of killing or damaging them.

These mixtures can be provided in different types of recipients. Often the mixtures are dispensed manually, which can be labour intensive and can cause practical difficulties associated with equally spreading the beneficial arthropods throughout the crop. From GB 2393890 envelopes or little bags are known containing a given amount of mixture, which can be distributed in the crop e.g. by suspending the envelope in every plant or every x plants in a row.

In large greenhouses, there is a need for automated or semi-automated devices for dispensing beneficial arthropods, in order to save labour and to achieve a regular spread of dispensed product. Devices for dispensing beneficial arthropods onto fields or crops, in particular as a mixture with a carrier, are known. From WO 2007/136246 a device is known for distributing beneficial arthropods by blowing. However, a drawback of such device is that blowing may damage the arthropods, which can result in too high losses and poor field application efficiency. Also, blowing systems are unlikely to achieve the even spread that would be desired for optimal results. Systems that make use of spraying, such as disclosed in US 5735459, suffer from similar drawbacks.

From US 4966329 an applicator for distributing a formulation of predator mites and a carrier is known. The applicator comprises a dispensing port at one or both ends of a container. The dispensing port is aligned with the longitudinal axis. The container is rotated around its longitudinal axis. In application, the dispensing port is continuously oriented towards ground. A drawback of this applicator, is that there is a risk that initially a too high amount of the predator mites will be applied, as predator mites have the tendency to crawl out of the carrier and towards light. This may lead to non-uniform application.

### Aims of the invention

It is an aim of the invention to provide devices and/or methods for dispensing beneficial arthropods which overcome drawbacks of the prior art.

It is an aim of the invention to provide devices and/or methods for dispensing beneficial arthropods that allow accurate distribution and/or uniform application.

It is an aim of the invention to provide devices and/or methods for dispensing beneficial arthropods that damage as little as possible the beneficial arthropods.

It is an aim of the invention to provide devices and/or methods for dispensing beneficial arthropods that allow to keep the arthropods mixed with the carrier. It is an aim of the present invention to provide devices and/or methods for dispensing beneficial arthropods that allow to prevent beneficial arthropods from crawling out of the dispensing device while the dispensing device is being prepared for operation.

It is an aim of the invention to provide devices for dispensing beneficial arthropods that allow to adjust the dispensing amount.

### Summary of the invention

Aspects of the present invention are related to devices for dispensing beneficial arthropods as set out in the appended claims. Aspects of the present invention are related to methods for dispensing beneficial arthropods as set out in the appended claims. Aims of the invention are met by providing methods and/or devices as set out in the appended claims.

According to a first aspect of the invention, there is provided a device for dispensing beneficial arthropods. The device comprises a housing for containing said beneficial arthropods, the housing being configured for rotating on an axis (axis of rotation) in both senses, a paddle for agitating said arthropods in the housing and an outlet for the beneficial arthropods. The outlet provides a passage for the arthropods between the housing and the (outer) ambient. Considering a tangential viewpoint about the axis, the outlet is provided juxtaposed to the paddle and at one side thereof. With such a configuration it is achieved that the paddle shields the outlet when the housing is rotated on the axis in the sense wherein the paddle precedes the outlet.

An advantage is that with such a simple construction two modes of operation are possible: agitation (without dispensing) and dispensing. The mode of operation can simply be changed by reversing the sense of rotation about the axis.

Preferably, the axis is configured for being arranged substantially horizontally (i.e. perpendicular to the gravity line). Hence, rotation occurs preferably in a (substantially) vertical plane.

Preferably, the outlet is of a tubular shape.

The outlet preferably protrudes in the housing. More preferably, a sidewall of the outlet forms the paddle.

Preferably, the outlet (or an axis of the outlet) is arranged transverse to the axis.

Preferably, devices according to the invention comprise means for adjusting the size of an aperture of the outlet. The aperture can refer to an intake of the outlet. It can alternatively refer to a discharge opening thereof. More preferably, the outlet is pivotably coupled to the housing for adjusting the aperture size. Even more preferably, devices comprise a screw engageably coupled between the outlet and the housing and a hinge for adjusting (and setting) the aperture size.

Preferably, the paddle is provided fixed to the housing.

Preferably, at least part of the housing and/or the outlet is made of a transparent material. At least part of the housing and/or the outlet can be made of a translucent material.

Preferably, devices of the invention comprise more than one paddle and outlet combination. More preferably, the more than one paddle and outlet are provided evenly spaced along the tangential circumference of the housing (with reference to the axis of rotation). An advantage is that the dispensing frequency can be increased and/or the dispensing can be performed more uniformly.

According to a second aspect of the invention, there is provided an apparatus for dispensing beneficial arthropods, comprising at least one device according to the invention and a beam for mounting said at least one device thereon. The beam forms a mounting support for the at least one device. The beam preferably is of a prismatic shape (e.g. square or rectangular cross section). The beam can alternatively be of a cylindrical shape (i.e. a shaft).

Preferably, in a mounted configuration, the axis (of rotation) of the at least one device is oriented in the direction of (or parallel to) the beam. The beam is preferably configured for rotating on the axis. More preferably, the at least one device is configured for rotating integrally with the beam.

Preferably, in a mounted configuration, the axis (of rotation) of the at least one device is oriented in a direction transverse to and preferably perpendicular to the beam. More preferably, the beam is arranged non-rotatably. Each of the at least one device is preferably arranged for rotating independently.

Preferably, the beam is configured to be arranged substantially horizontally (i.e. perpendicular to the gravity line). The beam is preferably configured for being translated. More preferably, the direction of translation is substantially horizontal (translation in a substantially horizontal plane).

Preferably, each of said at least one device comprises a motor for rotating the housing on the axis.

Preferably, each of said at least one device is removably coupled to the beam.

According to a third aspect of the invention, there is provided a method of dispensing beneficial arthropods, comprising the following steps. Firstly, providing a device or an apparatus according to the invention. Secondly, filling the housing of the device with a content comprising (or consisting of) the beneficial arthropods. Thirdly, rotating said housing on the axis (of rotation) in the sense wherein the paddle precedes the outlet for agitating the beneficial arthropods. Fourthly, rotating said housing on the axis (of rotation) in the reverse sense, wherein at each rotation cycle an amount of the beneficial arthropods gets in the outlet and is dispensed in the ambient by (further) rotation of the device. Fifthly, letting the dispensed amount fall on a crop to be treated by the action of gravity.

Preferably, gravity is the sole force used for dispensing the beneficial arthropods.

### Brief description of the drawings

Figure 1 represents a first embodiment of a device according to the invention. Figure 1A represents a cross section of the device as indicated. Figure 1B represents a front view of the device.

Figure 2 represents a second embodiment of a device according to the invention. A cross sectional view of the device is represented.

Figure 3 represents a frontal plan view of the cap 211 of the device of figure 2. Cross sectional view B-B is represented in figure 2.

Figure 4 represents the area of coverage with beneficial arthropods that can be achieved by devices according to the first embodiment and to the second embodiment.

### Detailed description of the invention

Devices according to the invention comprise a housing for use as a container for the beneficial arthropods. The beneficial arthropods can be present in the container as a mixture with a carrier. The housing is a totally enclosed case (except for an outlet) and is preferably provided with a closure for filling the housing with the arthropods, or the mixture carrier/arthropods.

Devices according to the invention further feature an axis of rotation. The housing is configured for rotating on said axis. The axis of rotation is advantageously arranged (substantially) horizontally. Alignment errors and the type of construction may cause the axis of rotation to divert from the horizontal. Preferably, the angle between the horizontal (a line perpendicular to the gravity line) and the axis of rotation, as measured in a vertical plane (i.e. comprising the gravity line), falls in the range between about 0° and about 20°, more preferably between about 0° and about 10° in absolute value.

Devices according to the invention comprise a paddle for agitating the (mixture comprising the) beneficial arthropods. The paddle is advantageously arranged fixed inside the housing (i.e. it is arranged to rotate integrally with the housing and non movable relative to the housing).

Devices according to the invention further comprise an outlet for dispensing the beneficial arthropods (the mixture of arthropods and carrier). The outlet and the paddle are arranged side by side, when considered from a viewpoint tangential about the axis of rotation (i.e. a viewpoint following the rotation on said axis). The outlet is arranged at one side of the paddle only. When the housing is rotating in one sense, the outlet precedes the paddle. When the outlet is rotating in the reverse sense, the paddle precedes the outlet.

Hence, the housing is arranged to rotate in both senses on said axis of rotation. The one sense then corresponds to dispensing the beneficial arthropods. The other (reverse) sense then corresponds to the action of keeping the arthropods, or a formulation of arthropods and carrier agitated (mixed), in order to prevent migration of the arthropods out of the carrier and eventually out of the device, when dispensing is not desired. Hence, when the housing is rotated in the other sense and as the paddle precedes the outlet, the outlet is shielded by the paddle and the arthropods are advantageously not dispensed.

In rotating, both the housing and the outlet rotate jointly.

The outlet is advantageously arranged to be always open. The outlet preferably has the form of a tube. The tube can be of a round, square, or rectangular cross section. Other forms of cross sections can be used as well. The tube can have a conical shape.

The outlet communicates with the housing at one end, referred to as the intake (of the outlet) and with the ambient at the other end (remote end, referred to as the discharge opening). The outlet preferably protrudes at least partially into the (case of the) housing. The outlet is attached to the housing and both can move together as an integral body.

The outlet is preferably so oriented that it is not parallel with the axis of rotation of the housing. For determining the orientation of the outlet one can consider the direction of flow through the outlet, or the longitudinal axis of the tube forming the outlet.

The outlet can be arranged oblique to the axis of rotation. Alternatively, it can be arranged perpendicular to the axis of rotation. The outlet is hence arranged at an angle with the axis of rotation, the angle preferably falling in the range between about 20° and about 90° in absolute values, more preferably between about 45° and about 90°, most preferably between about 60° and about 90°. Angles are measured in a plane parallel to the axis of rotation and an axis of the outlet (longitudinal axis).

With such orientation of the outlet, an alternation of the discharge opening (and possibly the intake) of the outlet between a downwards facing position and an upwards facing position during rotation can be obtained. Furthermore, such orientation of the outlet preferably allows the discharge opening to assume any orientation in a circle of 360° around the axis of rotation. As a result, a wide angle of distribution of the arthropods can be obtained.

The outlet, and in particular the part protruding in the housing is advantageously arranged such that at each rotation cycle (for rotation in the one sense), an amount of beneficial arthropods (and carrier) ends up in the outlet. Further rotation allows to evacuate the arthropods from the outlet through the discharge opening and hence to dispense them in the ambient (on a crop).

Evacuation from the outlet is performed by rotation of the housing on the axis of rotation and preferably by means of the sole action of gravity. Once the arthropods exit the outlet, dispensing and application on the crops is performed by means of the action of gravity, i.e. the arthropods are made to fall on the crop by means of gravity only. No dispensing by blowing, spraying or the like is used in devices and methods according to the present invention.

In other words, transporting of the arthropods from the outlet (discharge opening) to the crop is performed solely by means of gravity. No transportation by air displacement is used, which may damage or even kill (some of) the arthropods.

The distribution over an entire field is preferably achieved in one direction by rotation of the housing and the outlet, thereby obtaining an angle of coverage, and in the other direction (of two transverse directions) by translation of the device in said other direction. As the angle of coverage will typically not suffice for covering multiple crop rows, several devices according to the invention can be arranged side by side in said one direction.

Provided by the present invention are also methods of dispensing beneficial arthropods, which methods are based on the use of devices according to the present invention. Once the housing is filled with beneficial arthropods (can be with a formulation of arthropods and a carrier), the housing is rotated around the axis of rotation in said other sense as identified above, for keeping the arthropods agitated. Advantageously, rotating in said other sense prevents dispensing of the arthropods.

Agitation of the arthropods is desired, as these have the tendency to crawl out of the carrier and towards the light, or even towards the highest point. As a result, if no agitation is performed, the formulation in the housing would not be uniformly mixed after a short time. Furthermore, when the housing is filled with a formulation comprising beneficial arthropods, in order to ensure that the formulation is uniformly mixed, agitation should advantageously be performed.

In a following step, the arthropods are dispensed. The sense of rotation of the housing and the outlet is reversed (i.e. rotation in said one sense as identified above). Due to the construction of devices according to the invention, an amount of the formulation (or of the arthropods) thereby gets in the outlet. By further rotation, the arthropods fall out of the outlet and are dispensed. The arthropods fall by gravity on the crop. Transporting the arthropods to the crops by artificial air displacement is not performed. Artificial air displacement refers to the creation of a flow of air with the purpose of spreading the artificial arthropods. It does not refer to natural air displacement that might occur during dispensing, such as wind.

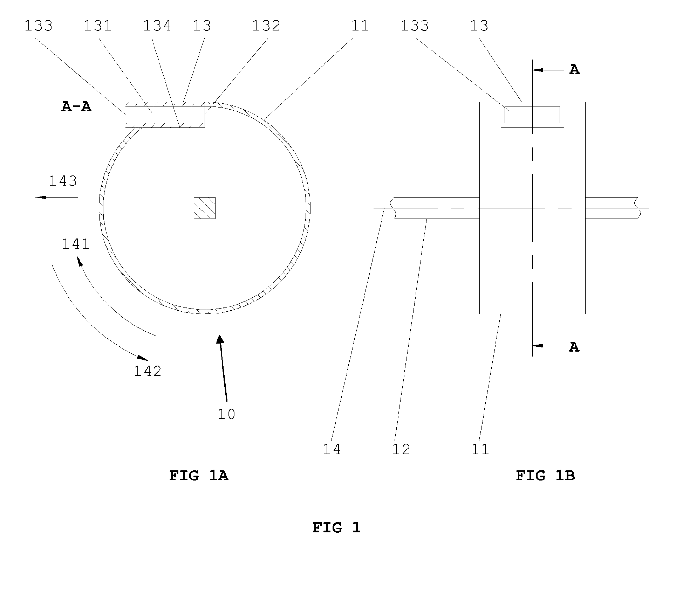

Figure 1 depicts a device 10 according to a first embodiment of the present invention. The device 10 comprises a housing 11 of a cylindrical, or preferably combined cylindrical and frusto-conical or spherical shape. The housing 11 is fixedly mounted onto a shaft 12. The housing 11 can comprise a closure (not shown) in the form of a cap for filling with beneficial arthropods, or a mixture of a carrier and said arthropods.

The device 10 further comprises an outlet 13, which protrudes into the housing 11. The outlet 13 is of a tubular shape, i.e. it comprises a canal 131 between an intake 132 and a discharge opening 133. The outlet 13 can be formed of a tubular component that can be inserted into and fastened to the housing 11.

The sidewall 134 of the outlet tube, which is arranged internal to the housing 11, forms a paddle.

In an alternative embodiment, the outlet canal 131 can be formed at one side by the external wall of the housing 11, and at an opposite side by the provision of a paddle 134. In the latter embodiment, the outlet 13 can easily be formed by the provision of an aperture in the housing forming the discharge opening 133 and the provision of a paddle 134 protruding into the housing 11.

Referring back to the embodiment of figure 1, the shaft 12 is arranged to rotate on its longitudinal axis 14 (axis of rotation). The housing 11 and the outlet 13 rotate together with the shaft 12, at the same rotational speed.

The shaft 12 is arranged to rotate on axis 14 both in a first sense 141 and in a second sense 142, being the reverse of the first sense 141. Rotation in the first sense 141 is for dispensing purposes. Rotation in the second sense 142 is for agitation.

The outlet 13 (and paddle 134) is (are) so arranged that when the shaft rotates in the second sense 142, the arthropods are prevented from evacuation through the outlet. Hence, no dispensing takes place.

The outlet 13 hence so protrudes in the housing that a sidewall 134 thereof forms a paddle. The wall 134 of canal 131 protruding into the housing 11 functions as a paddle for agitating the arthropods present in the housing, when the housing is rotated in the second sense 142.

When the shaft rotates in the first sense, the paddle 134 can act as a means for determining the amount of beneficial arthropods that is dispensed per revolution of the housing.

Besides rotation, the shaft 12 is further preferably arranged to translate along a direction 143 for moving the device 10 to a dispensing location and for dispensing the beneficial arthropods along an entire row of plants.

Inserts can be provided in the outlet 13 for adjusting the size of an aperture (e.g. of the discharge opening 133, the intake 132 or the canal 131), enabling to adjust the amount of arthropods dispensed at each revolution of the housing. By so doing, the device 10 can easily be adjusted to the crop type to be treated and/or the kind of content to be dispensed.

The device 10 is operated as follows. Firstly, the housing 11 is filled with beneficial arthropods, or a mixture comprising them. Filling can be performed through a dedicated closure (not shown). Next, the housing is rotated in the second sense 142 around axis 14 for keeping the content agitated. The wall 134 of outlet 13 acts as a paddle for the agitation. As the paddle 134 precedes the intake 132 in the second sense rotation, dispensing of the content of the housing 13 can be prevented. In case the device 10 is not located at the starting position for dispensing, the shaft 12 is translated to such position.

Subsequently, dispensing can be performed. The rotation of the housing is reversed and the housing now is rotated in the first sense 141 on axis 14. In the present case, the intake 132 precedes the paddle 134. By so doing, the intake 132 of outlet 13 is allowed to grab an amount of the content in the housing and said amount passes through the intake 132 into the canal 131 of the outlet 13. By further rotation, the canal 131 eventually assumes every orientation from horizontal to vertical, which allows to evacuate the content of canal 131 (including the beneficial arthropods) through the discharge opening 133.

By adjusting the size of an outlet aperture, the amount evacuated can be dosed. Furthermore, the dispensing (the evacuation) of the beneficial arthropods can be spread over a wider angle of rotation for a smaller aperture size. During dispensing, the shaft 12 can translate along direction 143. In the embodiment of figure 1, the direction of dispensing is parallel to the translation direction 143 of the shaft 12.

Upon leaving the outlet 13, the beneficial arthropods fall onto the plants under the influence of gravity. Hence, the beneficial arthropods are transported from the dispensing device 10 to the plants (crop) solely by gravity.

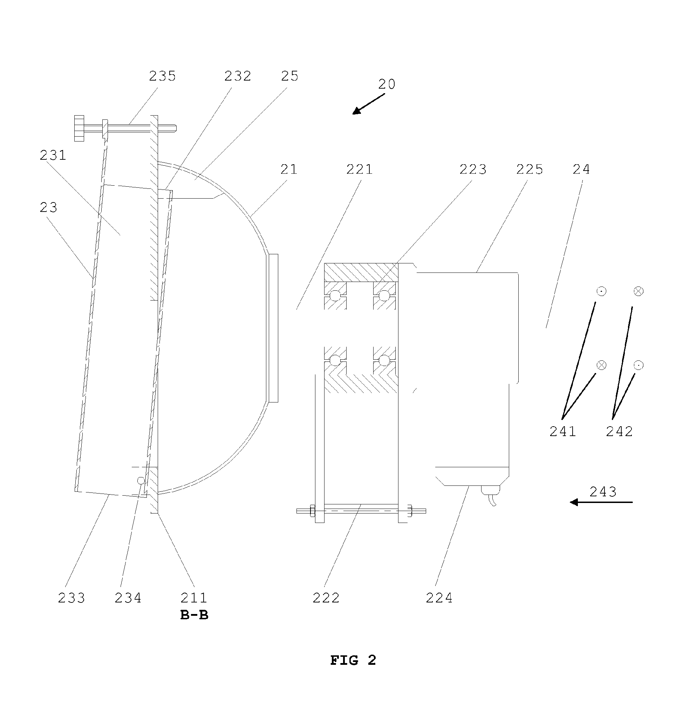

Figure 2 represents a device 20 for dispensing beneficial arthropods according to a second embodiment of the present invention. The device 20 comprises a housing 21 having the form of a bowl. The bowl is closed by a cap 211. Other shapes for the housing 21 are possible as well. However, the housing 21 has advantageously a frusto-conical or bowl-like shape, in order to enable the entire content to be evacuated. Either a part of the housing 21, or the cap 211 is preferably transparent in order to easily see when the housing is empty.

The housing 21 is fixedly mounted onto a shaft 221, which is rotatably arranged on a beam 222 by bearings 223. The shaft can be actuated by an electric motor 224, which is coupled to the shaft 221 via a reductor 225. The shaft 221 is oriented transverse to the beam 222, preferably perpendicular to the beam 222. The shaft 221 as described hereinabove enables the housing 21 to rotate on an axis 24, aligned with the shaft.

Advantageously, the housing 21 can be mounted removably on the shaft 221. This can be performed by the provision of a slip coupling (not shown) between the housing 21 and the shaft 221. Removing the housing 21 enables an easier filling thereof with beneficial arthropods.

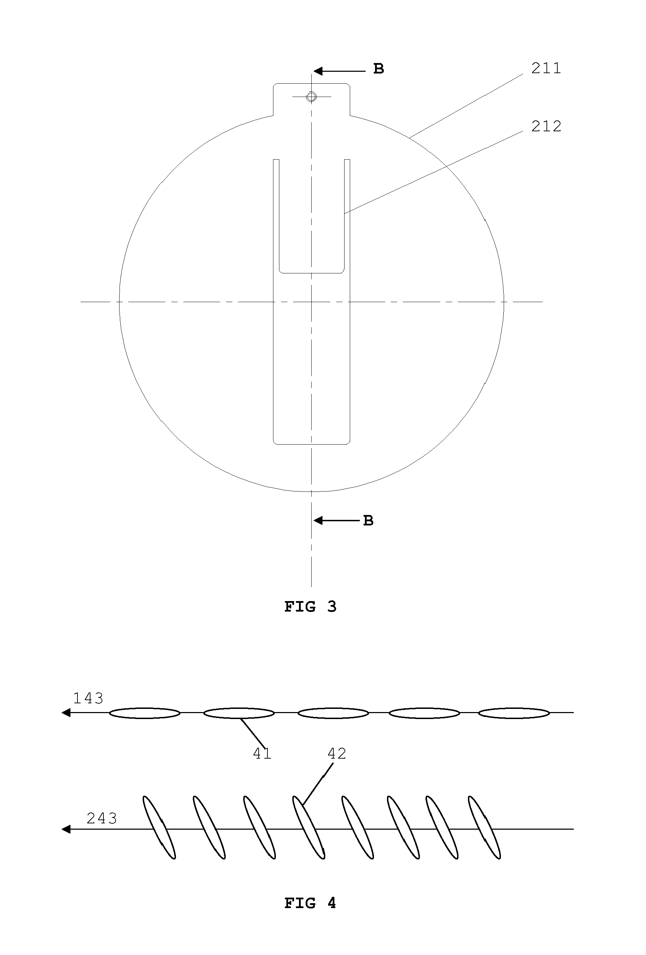

The device 20 further comprises an outlet 23, formed of a tube 231, which is pivotably coupled to the cap 211 of the housing 21 by means of a hinge 234. The cap 211 is so formed as to allow part of the outlet 23 to protrude into the housing 21. Figure 3 illustrates a possible shape of cap 211. Pivoting the outlet 23 about hinge 234 allows to widen or narrow the opening of an intake 232 of the outlet 23. The orientation of the outlet 23 relative to the hinge 234 and the housing 21 can be adjusted by a screw 235.

The end of the tube 231 at the side of the intake 232 can be completely open. The effective opening of the intake 232 is constituted by the area delimited by the tube wall inside the housing 21 and a lip 212 provided in the cap 211 and wherein the tube 231 is inserted. The remote end of the tube 231 constitutes a discharge opening 233 of the outlet 23.

The device 20 further comprises a paddle 25 for agitation. The paddle 25 is preferably provided against the tube 231 and directly behind the tube as seen from the view of figure 2. The paddle 25 and the outlet tube 231 are hence provided side by side as seen in the rotation direction. The outlet tube 231 is provided at one side of the paddle only.

As in the previous embodiment, the housing 21 and the outlet 23 are arranged to rotate integrally with the shaft 221, at the same rotational speed, around axis 24.

The shaft 221 is arranged to rotate around axis 24 both in a first sense 241 and in a second sense 242, being the reverse of the first sense 241. With reference to the view of figure 2, rotation in the first sense 241 refers to a rotation wherein the side above the axis 24 lifts up out of the sheet of the figure. That rotation is represented by front and rear arrowhead views 241. A circle with a dot represents a front view of an arrowhead. A circle with a slanted cross represents a rear view of an arrowhead. The front and rear arrowhead views hence indicate the sense of rotation. Rotation in the first sense 241 is for dispensing purposes. Rotation in the second sense 242 is for agitation.

The outlet 23 is so arranged that when the shaft 221 rotates in the second sense 242, the arthropods are prevented from evacuation through the outlet. In this case, the paddle 25 precedes the outlet 23. Hence, no dispensing takes place. When the shaft 221 rotates in the first sense 241, an amount of beneficial arthropods can be dispensed at each revolution of the shaft 221. In this case, the outlet 23 precedes the paddle 25.

The device 20 is operated as follows. After filling the housing 21 with a content comprising beneficial arthropods, the housing is rotated - continuously or intermittently - in the second sense 242 around axis 24. In case of rotation in the second sense 242, the paddle 25 precedes the intake 232 of the outlet 23. As a result, the paddle shields the outlet and can prevent that an amount of beneficial arthropods gets through the intake 232.

The device 20 can be displaced to a starting position for dispensing by translating the beam 222 in a direction 243 transverse to said beam.

The beam 222 is preferably arranged substantially horizontal (i.e. perpendicular to the gravity line). The term substantially refers to alignment errors and misalignment relative to the horizontal inherent to the type of construction (type of suspension of the beam). An amount of misalignment can be tolerable, such as of about 20°, preferably about 10° from the horizontal (absolute values, measured in a vertical plane). The beam 222 is configured for being translated in a substantially horizontal direction 243.

For dispensing, the housing is rotated on axis 24 in the first sense 241. In the latter case, the intake 232 precedes the paddle 25. The paddle 25 can retain an amount of content, which by further rotation on axis 24 falls through the intake 232 into the tube 231 and further out of the discharge opening 233.

Adjusting screw 235 enables to dose the amount dispensed per revolution, which can be selected in function of the kind of arthropod and the plant type to be treated.

The device 20 according to the second embodiment allows to obtain an increased coverage compared with the device 10 according to the first embodiment. Indeed, the second embodiment, as in the first embodiment, enables to discharge (dispense) beneficial arthropods over a certain angle of rotation on axis 24 (hence, the arthropods are not discharged at a single rotational position of the outlet, but the discharge out of the outlet is spread over a certain angle). However, in contrast to the first embodiment, the axis 24 of rotation in the second embodiment is arranged transverse (perpendicular) to the beam 222 by which device 20 is translated. Hence, the axis 24 of rotation is arranged substantially parallel with the direction 243 of translation of the device 20. As a result, dispensing is performed both in the direction 243 due to translation of the device 20 and in a direction transverse thereto due to rotation of device 20 on axis 24.

Figure 4 illustrates the coverage obtained by the dispensing devices 10 and 20 of respectively the first and the second embodiment. The outlet 13 of device 10 spreads (dispenses) the beneficial arthropods parallel to the translation direction 143, and the covered area 41 is hence parallel to that direction 143 as well. The outlet of device 20 spreads the beneficial arthropods in a direction transverse to the translation direction 243. The covered area 42 lies oblique to both the translation direction and the direction of spreading by the outlet.

As can be clearly deduced from figure 4, the dispensing by devices according to the invention is intermittent. Dispensing occurs at each rotation cycle, over a limited angular range. Advantageously, the dispensing frequency can be increased by providing more than one outlet/paddle combination, preferably evenly spaced about the axis of rotation.

The transverse arrangement of device 20 to the beam 222 can be applied to the device 10 of the first embodiment as well, and vice versa.

On a same beam 222, several devices 20 can be mounted side by side. Each device 20 can be actuated by a separate motor 224, or by a common actuator and a transmission chain to every device 20 on the beam 222.

For every revolution a dosed amount of content, preferably of a predetermined volume, can be evacuated from the device and dispensed. For dosing purposes, the rotational speed of devices of the invention is preferably kept at a constant rate, whereas an aperture of the outlet is adjusted.

Alternatively, the rotational speed of devices of the invention can be made dependent on the angular position, so as to impart a momentum to the beneficial arthropods at the moment they are evacuated from the outlet. By so doing, the angle of coverage can be increased.

The content for dispensing can be a mixture comprising beneficial arthropods and a carrier for said beneficial arthropods, as is known in the art. An example of a beneficial arthropod is the predatory mite Phytoseiulus. Beneficial arthropods can be shipped as nymphs and adults in a dry carrier material such as bran or vermiculite, often with spider mite eggs as prey to prevent cannibalism. The arthropods can be dispensed in all their life cycles, e.g. as larvae, nymphs, adults.

## Claims

1. A device (10,20) for dispensing beneficial arthropods, the device comprising:
- a housing (11,21) for containing said beneficial arthropods, wherein the housing is configured for rotating on an axis (14,24) in both senses,
- a paddle (134,25) for agitating said arthropods in the housing and
- an outlet (13,23) for the beneficial arthropods,
wherein, considering a tangential viewpoint about the axis, the outlet is provided juxtaposed to the paddle and at one side thereof, such that the paddle shields the outlet when the housing is rotated on the axis in the sense (142,242) wherein the paddle precedes the outlet.

2. The device according to claim 1, wherein the axis (14,24) is configured for being arranged substantially horizontal.

3. The device according to claim 1 or 2, wherein the outlet is of a tubular shape and protrudes in the housing.

4. The device according to claim 3, wherein a sidewall (134) of the outlet forms the paddle.

5. The device according to any one of the preceding claims, wherein the outlet is arranged transverse to the axis.

6. The device according to any one of the preceding claims, comprising means (235) for adjusting the size of an aperture of the outlet.

7. The device according to claim 6, wherein the outlet is pivotably coupled (234) to the housing for adjusting the aperture size.

8. The device according to any one of the preceding claims, wherein the paddle is provided fixed to the housing.

9. The device according to any one of the preceding claims, wherein at least part of the housing and/or the outlet is made of a transparent or translucent material.

10. An apparatus for dispensing beneficial arthropods, the apparatus comprising at least one device according to any one of the preceding claims and a beam (12,222) for mounting said at least one device thereon.

11. The apparatus according to claim 10, wherein when mounted, the axis of the at least one device is oriented in the direction of the beam, wherein the beam is configured for rotating on the axis, and wherein the at least one device is configured for rotating integrally with the beam.

12. The apparatus according to claim 10, wherein when mounted, the axis of the at least one device is oriented in a direction transverse to and preferably perpendicular to the beam.

13. A method of dispensing beneficial arthropods, the method comprising the steps of:
- providing a device or an apparatus according to any one of the preceding claims,
- filling the housing of the device with a content comprising the beneficial arthropods,
- rotating said housing on the axis in the sense wherein the paddle precedes the outlet for agitating the beneficial arthropods,
- rotating said housing on the axis in the reverse sense, wherein at each rotation cycle an amount of the beneficial arthropods gets in the outlet and is dispensed in the ambient by rotation of the device,
- letting the dispensed amount fall on a crop to be treated by the action of gravity.

14. The method according to claim 13, wherein gravity is the sole force used for dispensing the beneficial arthropods.
